# EUROPÄISCHE PATENTSCHRIFT

(11) **EP 2 780 128 B1**
(45) Veröffentlichungstag und Bekanntmachung des Hinweises auf die Patenterteilung: **17.05.2017**
(21) Anmeldenummer: 12784440.5
(22) Anmeldetag: 16.10.2012
(51) Int. Cl.: B23C 5/20, B23C 5/06

(54) **SCHNEIDEINSATZ**
CUTTING INSERT
PLAQUETTE DE COUPE

(30) Priorität: 16.11.2011 AT 6262011 U
(43) Veröffentlichungstag der Anmeldung: 24.09.2014
(73) Patentinhaber: Ceratizit Luxembourg Sàrl, 8232 Mamer (LU)
(72) Erfinder: KISTER, Fabien, F-57000 Metz (FR)
(74) Vertreter: Ciesla, Dirk
(86) Internationale Anmeldenummer: PCT/EP2012/004311
(87) Internationale Veröffentlichungsnummer: WO 2013/071998

(56) Entgegenhaltungen:
- WO-A1-2004/062840
- WO-A1-2010/023659
- DE-U1- 9 107 615

## Beschreibung

Die vorliegende Erfindung bezieht sich auf einen Schneideinsatz.

Schneideinsätze sind allgemein bekannt. Insbesondere sind Schneideinsätze für einen Schneidkopf einer Fräsmaschine bekannt. Ein Schneideinsatz wird vorzugsweise mehrere Male benutzt. Daher weisen bereits bekannte Schneideinsätze mehr als eine Schneidkante auf. Es ist auch bekannt, Schneideinsätze bereitzustellen, die um eine Rotationsachse gedreht werden können, um eine abgenutzte Schneidkante durch eine neue Schneidkante zu ersetzen. Außerdem können einige existierende Schneideinsätze von beiden Seiten benutzt werden. Die allgemein bekannten Schneideinsätze werden zum Beispiel zum Fräsen von Oberflächen verwendet.

Es ist ein Problem bereits bekannter Schneideinsätze, dass man sich entscheiden muss, ob ein schnelles Schneiden oder eine gute Oberflächenqualität notwendig ist. Üblicherweise sind zwei Schritte notwendig, um eine hochwertige Oberflächengüte zu erhalten. Der erste Schritt ist ein schneller Frässchritt zum Entfernen von Material. Ein schnelles Fräsen führt zu einer großen Menge von abgespantem Material. In einem zweiten Frässchritt wird die Oberfläche nachbearbeitet, und die hohe Qualität der Oberfläche wird erreicht. Daher sind zwei verschiedene Schritte, und insbesondere zwei verschiedene Schneideinsätze, notwendig. Dies erhöht die Kosten des Herstellungsschritts sowie der Maschinen, da zwei verschiedene Frässchritte notwendig sind. Es wurde bereits erörtert, einen besseren Schneideinsatz anzubieten, indem hinterschnittene Abschnitte auf den Seitenflächen bereitgestellt werden, wie es zum Beispiel in der internationalen Patentanmeldung offenbart wird, die als WO 2010/134700 veröffentlicht ist. Um hinterschnittene Abschnitte an den Seitenflächen bereitzustellen, werden aber die Kosten der Herstellung der Schneideinsätze erhöht. Insbesondere ist es nicht einfach, diese Schneideinsätze direkt aus einem Partikelpulver und durch einen Pressschritt herzustellen.

WO 2010/023659 A1 beschreibt einen Schneideinsatz zur Aufnahme in einem rotierenden Schneidwerkzeug, gemäß dem Oberbegriff des Anspruchs 1. Der Schneideinsatz weist zwei gegenüberliegende Endflächen und eine sich dazwischen erstreckende Umfangsseitenfläche auf, wobei die Endflächen eine gemeinsame erste Symmetrieachse aufweisen, um die die Endflächen jeweils eine N-fache Drehsymmetrie aufweisen. An dem Übergang zwischen einer Endfläche und der Umfangsseitenfläche ist jeweils eine Umfangsschneidkante ausgebildet. Die Umfangsschneidkante weist N gekrümmte Schneidkanten auf, die in N gerade Schneidkanten übergehen, die sich zwischen den Enden der gekrümmten Schneidkanten erstrecken. Die gekrümmten Schneidkanten der beiden Endflächen überlappen in einer Aufsicht auf den Schneideinsatz entlang der ersten Symmetrieachse nicht miteinander.

Basierend auf der obigen Erörterung der Schneideinsätze des Stands der Technik ist es eine Aufgabe der vorliegenden Erfindung, die oben erwähnten Probleme zumindest teilweise zu lösen. Insbesondere ist es eine Aufgabe der vorliegenden Erfindung, einen Schneideinsatz bereitzustellen, der einfach und kostengünstig herstellbar ist und in einem einzigen Schritt zu einer ebenen und flachen Oberfläche mit einer guten Oberflächengüte führt.

Die genannte Aufgabe wird durch einen Schneideinsatz gemäß den Merkmalen des unabhängigen Anspruchs 1 der vorliegenden Anmeldung gelöst. Weitere Einzelheiten und Merkmale der vorliegenden Erfindung können aus den abhängigen Ansprüchen, der Beschreibung und den Zeichnungen entnommen werden. Im Zusammenhang mit den abhängigen Ansprüchen erörterte Merkmale und Einzelheiten können auch unter Bezug auf den unabhängigen Anspruch und umgekehrt verstanden werden.

Ein Schneideinsatz gemäß der vorliegenden Erfindung weist einen Einsatzkörper mit einem im Wesentlichen kreisförmigen Querschnitt auf. Ein im Wesentlichen kreisförmiger Querschnitt ist als ein Querschnitt zu verstehen, der hauptsächlich in einem Kreis geformt ist. Das führt insbesondere zu einem Schneideinsatz mit einer im Wesentlichen rohrförmigen geometrischen Form. Der Einsatzkörper weist eine Vorderfläche und eine Rückfläche auf. Bezüglich der rohrförmigen geometrischen Ausdehnung des Schneideinsatzes können die Vorder- und die Rückfläche als eine untere Oberfläche und eine obere Oberfläche verstanden werden. Eine umgebende Seitenfläche verbindet die Vorderfläche mit der Rückfläche. Aufgrund des im Wesentlichen kreisförmigen Querschnitts verläuft die Seitenfläche im Wesentlichen wie ein Zylindermantel.

Es kann zusammengefasst werden, dass der Schneideinsatz von im Wesentlichen kreisförmigem Querschnitt ist und daher im Wesentlichen eine zylindrische Ausdehnung hat. Jedoch ist der erfindungsgemäße Schneideinsatz dadurch gekennzeichnet, dass die Seitenfläche mindestens eine Facette aufweist. Weiter ist mindestens eine Schneidkante an der Schnittstelle zwischen der Vorderfläche und mindestens einer Facette der Seitenfläche gebildet. Dies kann so verstanden werden, dass die Facette eine Abweichung von dem im Wesentlichen kreisförmigen Querschnitt bildet und eine Abweichung von der im Wesentlichen zylindrischen Form des Schneideinsatzes bildet. Die Verwendung der Facette ist als eine kleine geometrische Erstreckung basierend auf der Gesamtoberflächenfläche der Seitenfläche zu verstehen.

Die Verwendung relativ kleiner Facettenbereiche für die mindestens eine Facette auf der Seitenfläche führt zu einem Schneideinsatz, der zwei verschiedene Fräsfunktionen während eines Fräsvorgangs bietet. Insbesondere ist ein Teil der Schneidkante durch den zylindrischen Teil der Kante gebildet und ein weiterer Teil der Schneidkante ist durch die Kante zwischen der Facette und der Vorderfläche gebildet. Während des Fräsvorgangs kann die Facette in Richtung der zu bearbeitenden Fläche des zu fräsenden Materials weisen. Daher wird der Teil der Schneidkante, der sich am im Wesentlichen kreisförmigen Querschnitt befindet, für den Hauptfrässchritt verwendet, nämlich, um die Dicke des Materials zu verringern. Im gleichen Schritt folgt der Teil der Schneidkante, der zwischen der Facette und der Vorderfläche gebildet ist, dieser erwähnten so genannten primären Schneidkante. Daher kann die zwischen der mindestens einen Facette und der Vorderfläche gebildete Schneidkante auch eine sekundäre Schneidkante genannt werden. Die sekundäre Schneidkante folgt der primären Schneidkante und kann daher die Oberfläche des Materials nachbearbeiten.

Vorzugsweise kann die Facette eine flache Form haben. Es ist aber auch möglich, dass die Facette mit einer leicht konkaven oder konvexen Form in Draufsicht auf die Vorderfläche versehen ist. Wenn die Facette auf der Seitenfläche des Schneideinsatzes im Wesentlichen flach ist, werden während des Frässchritts keine vermeidbaren Rillen von der zweiten Schneidkante erzeugt. Daher erfüllen die erste Schneidkante und die zweite Schneidkante zwei unterschiedliche Fräsfunktionen in einem einzigen Gesamtfräsvorgang. Die erste Schneidkante reduziert die Dicke, und die zweite Schneidkante bearbeitet die Fläche nach, beides in einem einzigen Schritt.

Die mindestens eine Facette erstreckt sich von der Vorderfläche zur Rückfläche.

Der Schneideinsatz gemäß der vorliegenden Erfindung ist insbesondere inverssymmetrisch bezüglich eines Querschnitts lotrecht zur Rotationsachse des Einsatzkörpers. In anderen Worten: der Schneideinsatz kann als einer Hauptrotationsachse folgend verstanden werden und ist daher bezüglich dieser Achse rotationssymmetrisch oder fast rotationssymmetrisch.

Weiter kann der Schneideinsatz gemäß der vorliegenden Erfindung mehr als eine Facette aufweisen und daher auch mehr als eine Schneidkante aufweisen. Natürlich sind alle Schneidkanten eines erfindungsgemäßen Schneideinsatzes vorzugsweise in eine erste und eine zweite Schneidkante unterteilt, wie sie oben ausführlich bezüglich einer primären und einer sekundären Schneidkante erörtert wurden. Es ist ein weiterer Vorteil eines erfindungsgemäßen Schneideinsatzes, dass ein solcher Schneideinsatz einfach ohne eine Hinterschneidung hergestellt werden kann. Aufgrund dieser Tatsache kann ein Partikelpulver verwendet werden, das in einem Presswerkzeug zusammengepresst wird, um den Schneideinsatz gemäß der vorliegenden Erfindung herzustellen. Nachdem das Partikelpulver in dem Presswerkzeug verdichtet wurde, kann der fertige Schneideinsatz ohne jede zusätzliche Verwendung eines Werkzeugs oder einer Maschine aus dem Presswerkzeug entnommen werden. Insbesondere sind keine beweglichen Teile eines solchen Presswerkzeugs notwendig.

Es ist mindestens eine Schneidkante an der Schnittstelle zwischen der Rückfläche und der mindestens einen Facette der Seitenfläche gebildet. In anderen Worten: es sind Schneidkanten an der Vorderfläche zur Facette sowie an der Rückfläche zur Facette gebildet. Dies führt zu einem Schneideinsatz, der sogar noch öfter verwendet werden kann aufgrund der Tatsache, dass die Anzahl von Schneidkanten auf diese Weise erhöht, insbesondere verdoppelt, ist. Der Schneideinsatz weist eine Vorderfläche und eine Rückfläche auf. Wenn sich zum Beispiel vier

Facetten auf der Seitenfläche des Schneideinsatzes befinden, gibt es vier Schneidkanten an der Vorderfläche. Aufgrund der Verwendung der Rückfläche zusammen mit den Facetten auf der Seitenfläche sind vier zusätzliche Schneidkanten nutzbar. Insgesamt kann ein solcher Schneideinsatz acht separat nutzbare Schneidkanten bieten. Wenn die Anzahl von Facetten zum Beispiel auf bis zu acht Facetten erhöht wird, können insgesamt sechzehn getrennte Schneidkanten bei einem einzigen Schneideinsatz genutzt werden. Daher kann ein einziger Schneideinsatz über einen längeren Zeitraum in einer Fräsmaschine genutzt werden.

Es ist auch möglich, dass gemäß der vorliegenden Erfindung der Schneideinsatz dadurch gekennzeichnet ist, dass die Seitenfläche sich zumindest im Wesentlichen parallel zur Rotationsachse des Schneideinsatzes erstreckt. Die Seitenfläche erstreckt sich aufgrund des im Wesentlichen kreisförmigen Querschnitts des erfindungsgemäßen Schneideinsatzes außer den Facetten insbesondere entlang eines Zylindermantels. Dies führt zu einer Situation, in der nicht nur die Facetten, sondern auch die Seitenfläche das Hinterschneiden des Schneideinsatzes vermeidet und einen bequemen Fertigungsvorgang des Schneideinsatzes durch die Verwendung von Partikelpulver ermöglicht. Zudem führt die Beseitigung einer solchen Hinterschneidung zu verringerten Fertigungskosten und damit zu kostengünstigeren Schneideinsätzen. Diese geometrische Beziehung kann auch so verstanden werden, dass die Projektion der Kante zwischen der Vorderfläche und der Seitenfläche fast oder im Wesentlichen mit der Schnittstelle zwischen der Rückfläche und der Seitenfläche kongruent ist. Wenn man entlang der Rotationsachse des Schneideinsatzes auf die Vorderfläche des Schneideinsatzes blickt, liegt die Rückfläche genau hinter der Vorderfläche und ist von der Vorderfläche aus nicht sichtbar und umgekehrt. Dies führt zu einer großen Symmetrie des gesamten Schneideinsatzes, was ihn leicht herstellbar und gleichzeitig leicht verwendbar macht. Die größere Symmetrie ist auch ein Vorteil aufgrund der Tatsache, dass der Halter für einen solchen Schneideinsatz auf einfachere Weise gefertigt werden kann. Insbesondere muss in einem solchen Fräskopf nur eine Haltestellung für den Schneideinsatz vorgesehen werden. Aufgrund der größeren Symmetrie kann der Schneideinsatz in den gleichen Halter in der gleichen Haltestellung in allen anderen Ausrichtungen eingepasst werden. Dies muss so verstanden werden, dass der Schneideinsatz den Halter für alle Ausrichtungen des Schneideinsatzes an den gleichen Stellen berührt.

Es ist auch möglich, dass gemäß der vorliegenden Erfindung der Schneideinsatz dadurch gekennzeichnet ist, dass er mindestens 4n Facetten und 4n Schneidkanten aufweist. Bezüglich dieser Zahlen ist "n" ein Element von [1, 2, 3, 4, ...]. In anderen Worten: 4, 8, 12 usw. Facetten sowie 4, 8, 12 usw. Schneidkanten werden von einem erfindungsgemäßen Schneideinsatz bereitgestellt. Die Erhöhung von "n" erhöht die Verwendbarkeit, aber auch die Komplexität des erfindungsgemäßen Schneideinsatzes. Die Verwendung von mindestens 4 Facetten und 4 Schneidkanten führt zu der Möglichkeit, die Facetten und die Schneidkanten bezüglich der Drehachse des Schneideinsatzes symmetrisch anzuordnen. Bezüglich eines jeweiligen Halters für den erfindungsgemäßen Schneideinsatz können mindestens zwei Facetten als Flächenkontakte zwischen dem Schneideinsatz und dem Halter verwendet werden. Über im Wesentlichen flache Facetten ist es sehr viel einfacher, die resultierenden Kräfte zu übertragen und die Drehung des Schneideinsatzes während des Fräsvorgangs zu vermeiden. Vorzugsweise ist n 1 oder 2, so dass 4 oder 8 Facetten bereitgestellt werden. Für diese Zahlen kann die Länge der Schneidkanten lang genug für eine bevorzugte Fräsfunktionsweise konstruiert werden.

Es ist gemäß der vorliegenden Erfindung auch möglich, dass ein Schneideinsatz dadurch gekennzeichnet ist, dass der Einsatzkörper mindestens eine primäre und mindestens eine sekundäre Schneidkante aufweist, wobei die mindestens eine sekundäre Schneidkante an der Schnittstelle zwischen der Vorderfläche und der mindestens einen Facette der Seitenfläche gebildet ist. Natürlich kann er in gleicher Weise auch für eine sekundäre Schneidkante angepasst werden, die sich an der Schnittstelle zwischen der Rückfläche und den Facetten der Seitenfläche befindet. Die Verwendung einer primären und einer sekundären Schneidkante führt zur Kombination einer primären Schneidkante für eine Hauptmaterialentfernung und einer sekundären Schneidkante zur Oberflächennachbehandlung. Wie bereits ausführlich erörtert, führt eine solche Konstruktion eines erfindungsgemäßen Schneideinsatzes zu der Möglichkeit, die Hauptmaterialentfernung und die Oberflächennachbehandlung innerhalb eines einzigen Schritts eines Fräsvorgangs zu kombinieren.

Außerdem ist es möglich, dass ein erfindungsgemäßer Schneideinsatz dadurch gekennzeichnet ist, dass die Seitenfläche außer den Facetten durch eine einzige imaginäre zylindrische Umgebungsfläche abgedeckt werden kann. Wie bereits ausführlich angegeben, ist der Schneideinsatz gemäß der vorliegenden Erfindung im Wesentlichen von zylindrischer Form. Die Facetten sind zum Beispiel innerhalb dieser im Wesentlichen zylindrischen Form gebildet. Insbesondere erstreckt sich kein Teil des Schneideinsatzes über die zylindrische Form, besonders den Zylindermantel, hinaus, der durch den Hauptseitenflächenbereich des Schneideinsatzes definiert wird. Zum Beispiel ist die Fertigung einer solchen Geometrie viel einfacher als diejenige komplexerer Aufbauten. In anderen Worten: die Facetten können als abgeschnittene Teile der Seitenfläche verstanden werden, besonders als abgeschnittene Teile eines mathematischen Zylindermantels. Natürlich ist es auch möglich, dass die Seitenfläche aus abwechselnden Zylindersegmenten und Facetten besteht, die sich je von der Vorderfläche zur Rückfläche erstrecken.

Der Schneideinsatz gemäß der vorliegenden Erfindung ist dadurch gekennzeichnet, dass weniger als 40 % der Fläche der Seitenfläche durch Facetten gebildet wird. In anderen Worten: die Summe aller Flächen der Facetten ist kleiner als die Fläche der Seitenfläche außer den Facetten. Dies verringert die maximale Ausdehnung aller Facetten auch unter einen Wert von 40% der Fläche der Seitenfläche. Dies führt zu einer größeren Stabilität in Kombination mit allen anderen Vorteilen, die bereits bezüglich eines erfindungsgemäßen Schneideinsatzes ausführlich erörtert wurden.

Weiter ist es möglich, dass ein erfindungsgemäßer Schneideinsatz dadurch gekennzeichnet ist, dass mindestens eine Facette zu einem kreisförmigen Querschnitt mit einem kleineren Durchmesser als dem Durchmesser eines im Wesentlichen kreisförmigen Querschnitts des Einsatzkörpers tangential ist. In anderen Worten: zwei Kreise können in einem Querschnitt eines erfindungsgemäßen Schneideinsatzes definiert werden. Ein Kreis kann als der Außenkreis definiert werden, der der Kreis für die im Wesentlichen kreisförmige Ausdehnung dieses Querschnitts ist. Ein Kreis mit einem kleineren Durchmesser ist vollständig innerhalb dieses äußeren Kreises angeordnet. Auf diesem einzigen Kreis kontaktieren alle Facetten des erfindungsgemäßen Schneideinsatzes den inneren Kreis tangential. In anderen Worten: die Symmetrie des Schneideinsatzes wird noch einmal durch die geometrische Erstreckung erhöht. Es kann gesagt werden, dass die Facetten sich alle innerhalb des äußeren Kreises und dadurch auch innerhalb des äußeren Zylindermantels befinden.

Es ist weiter möglich, dass gemäß der vorliegenden Erfindung der Schneideinsatz dadurch gekennzeichnet ist, dass die mindestens eine Schneidkante zumindest teilweise einer geraden Linie folgt. Eine gerade Linie muss in dieser Definition als eine gerade Linie in drei Dimensionen verstanden werden, und nicht nur in der Projektion von der Vorderfläche und/oder der Rückfläche. In anderen Worten: die Schneidkante, zumindest die sekundäre Schneidkante, enthält keine Kurve an der Schnittstelle zwischen der Vorderfläche und der Facette und/oder der Rückfläche und der Facette.

Es ist auch möglich, dass ein erfindungsgemäßer Schneideinsatz dadurch gekennzeichnet ist, dass der Einsatzkörper ein Durchgangsloch zur Befestigung an einem Einsatzhalter aufweist. Das Durchgangsloch erstreckt sich im Wesentlichen entlang der Rotationsachse des Schneideinsatzes. Daher ist nur eine Befestigungseinrichtung notwendig, um den Schneideinsatz an einem Halter zu befestigen.

Es ist auch möglich, dass gemäß der vorliegenden Erfindung der Schneideinsatz dadurch gekennzeichnet ist, dass außer den Facetten die Seitenfläche bezüglich einer Rotationsachse des Einsatzkörpers rotationssymmetrisch ist. Wieder führt dies zu einer größeren Symmetrie und daher zu einer Verringerung der Herstellungskosten und zu einer Verringerung der Kosten des Schneideinsatzes. Außerdem ist ein solcher Schneideinsatz einfacher in der Handhabung.

Es ist auch möglich, dass gemäß der vorliegenden Erfindung der Schneideinsatz dadurch gekennzeichnet ist, dass der spezifische Freiwinkel für die mindestens eine Facette gleich 0 Grad ist. Wieder führt dies zu einer billigen Art einer doppelseitigen Nutzung und einer einfachen Fertigung aufgrund der Tatsache, dass keine Hinterschneidung auf der Seitenfläche notwendig ist. Vorzugsweise ist der spezifische Freiwinkel der Seitenfläche gleich 0° zumindest in dem Bereich, der sich zwischen den Schneidkanten der Vorderfläche und der Rückfläche erstreckt.

Obwohl bisher nicht ausdrücklich erwähnt, können die Schneidkanten als angefaste Schneidkanten vorgesehen sein, wie es in der Technik bekannt ist. Außerdem kann der Schneideinsatz gemäß der vorliegenden Erfindung auch als doppelseitiger Schneideinsatz bezeichnet werden, zumindest, wenn Schneidkanten an den Schnittstellen zur Vorderfläche und zur Rückfläche vorgesehen sind. Zudem sind die Vorderfläche und die Rückfläche eines Schneideinsatzes gemäß der vorliegenden Erfindung zumindest im Wesentlichen gleich, insbesondere bezüglich ihres Projektionsbereichs.

Der Schneideinsatz ist ein Fräs-Schneideinsatz. Gemäß einer vorteilhaften Weiterbildung wird ein Fräswerkzeug mit einem Einsatzhalter und zumindest einem zuvor beschriebenen Schneideinsatz bereitgestellt. Bevorzugt kann der Einsatzhalter mit einer Mehrzahl der zuvor beschriebenen Schneideinsätze bestückt sein. Die Schneideinsätze der Mehrzahl von Schneideinsätzen können dabei bevorzugt bezüglich einer Rotationsachse des Fräswerkzeugs dieselbe Anordnung und Ausrichtung aufweisen und insbesondere gleichmäßig über den Umfang des Fräswerkzeugs verteilt sein.

Die vorliegende Erfindung wird außerdem unter Bezug auf die beiliegenden Zeichnungen beschrieben. Die Begriffe "links", "rechts", "über" und "unter" werden bezüglich einer Ausrichtung der Zeichnungen mit lesbaren Bezugszeichen verwendet. Die Zeichnungen zeigen schematisch:
- Fig. 1: eine Ausführungsform eines Halters mit einem erfindungsgemäßen Schneideinsatz;
- Fig. 2a: eine Ausführungsform eines erfindungsgemäßen Schneideinsatzes;
- Fig. 2b: eine weitere Ausführungsform eines Schneideinsatzes;
- Fig. 3: eine Draufsicht auf die Vorderfläche des Schneideinsatzes in einem Halter der Fig. 1;
- Fig. 4a: eine Ausführungsform eines erfindungsgemäßen Schneideinsatzes;
- Fig. 4b: ein Detail des Schneideinsatzes der Fig. 4a;
- Fig. 5a: eine Draufsicht auf den Schneideinsatz der Fig. 4a; und
- Fig. 5b: eine Seitenansicht des Schneideinsatzes der Fig. 4a.

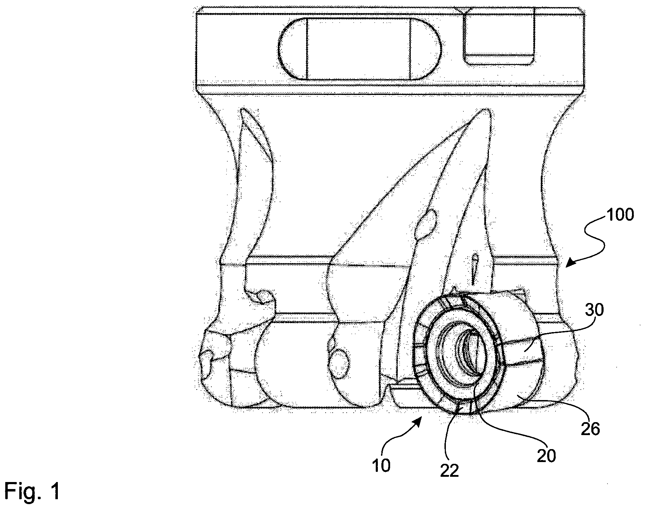

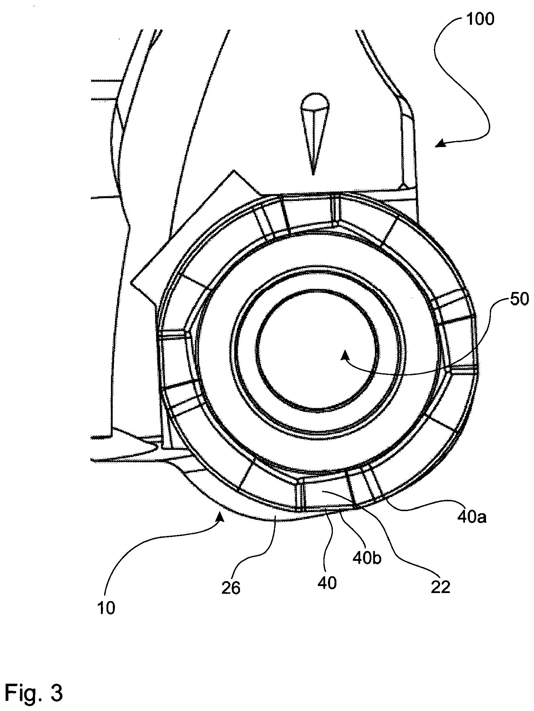

Die Fig. 1 und 3 zeigen die Verwendung eines erfindungsgemäßen Schneideinsatzes -10-. Der Schneideinsatz -10- ist als ein Fräs-Schneideinsatz ausgebildet. Dazu kann ein Einsatzhalter -100- verwendet werden, der einen oder mehrere der Schneideinsätze -10- halten kann. Ein Fräswerkzeug mit einem Einsatzhalter -100- und einem darin montierten Schneideinsatz -10- ist in Fig. 1 gezeigt. Wie man in Fig. 1 sehen kann, ist der Schneideinsatz -10-bezüglich der Rotationsachse des Schneideinsatzes -10- und der betreffenden Ebene unter dem Halter -100- geneigt. Weitere Einzelheiten können aus Fig. 3 abgeleitet werden. Wie man von der Vorderfläche -22- des Einsatzes -10-sehen kann, erstreckt sich eine Seitenfläche -26- fast oder im Wesentlichen in einer zylindrischen Form. Dies führt zu einem im Wesentlichen kreisförmigen Querschnitt des Schneideinsatzes -10-, der zum Beispiel in Fig. 3 sichtbar ist.

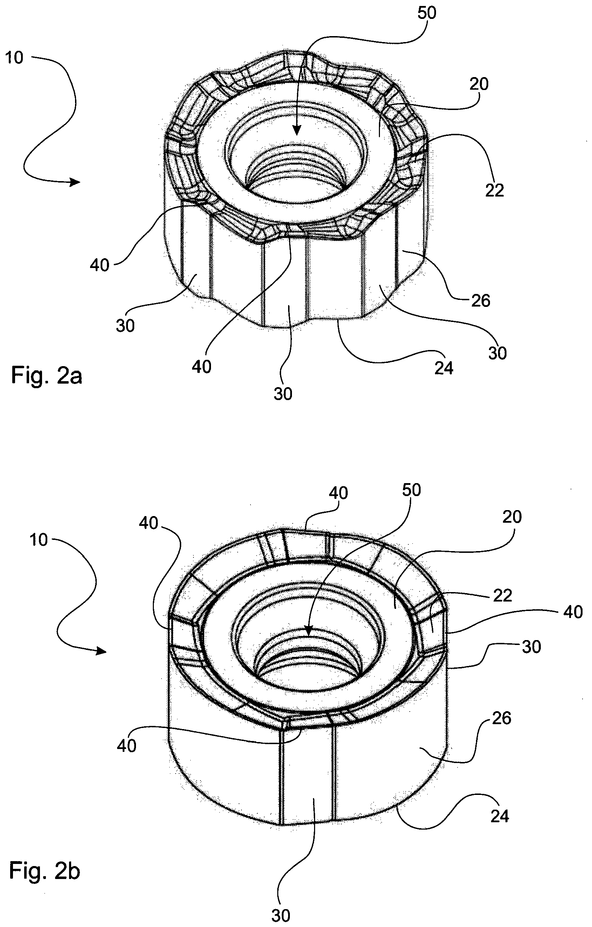

Ein Durchgangsloch -50- kann zur Befestigung des Schneideinsatzes -10- am Halter -100- verwendet werden. Wie man in Fig. 3 sehen kann, weist der Schneideinsatz -10- eine Schneidkante -40- auf, die eine primäre Schneidkante -40a- und eine sekundäre Schneidkante -40b- aufweist. Die Beziehung zwischen den verschiedenen Flächen und den Schneidkanten wird mit Bezug auf die Fig. 2a und 2b sowie die Fig. 4a bis 5d ausführlicher erörtert.

Fig. 2a zeigt eine Ausführungsform des erfindungsgemäßen Schneideinsatzes -10-. Ein Schneideinsatz -10- dieser Ausführungsform weist eine Vorderfläche -22- und eine Rückfläche -24- sowie eine Seitenfläche -26-auf. Entlang der Seitenfläche -26- mit im Wesentlichen den geometrischen Abmessungen eines Zylindermantels, erstrecken sich 8 flache Facetten -30-von der Vorderfläche -22- zur Rückfläche -24-. Alle diese flachen Facetten -30-haben Seitenränder, die sich im Wesentlichen parallel zur Rotationsachse des Schneideinsatzes -10- erstrecken.

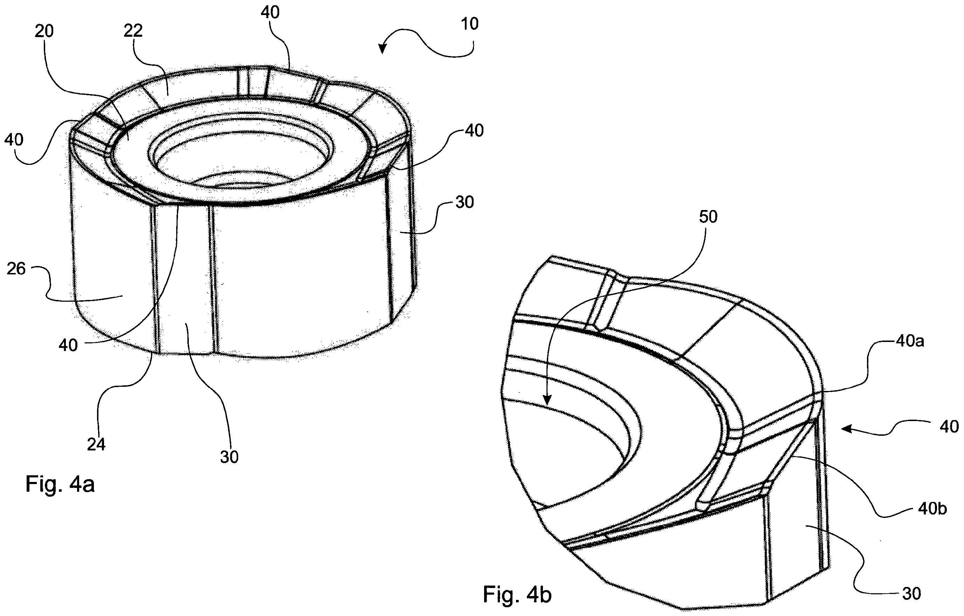

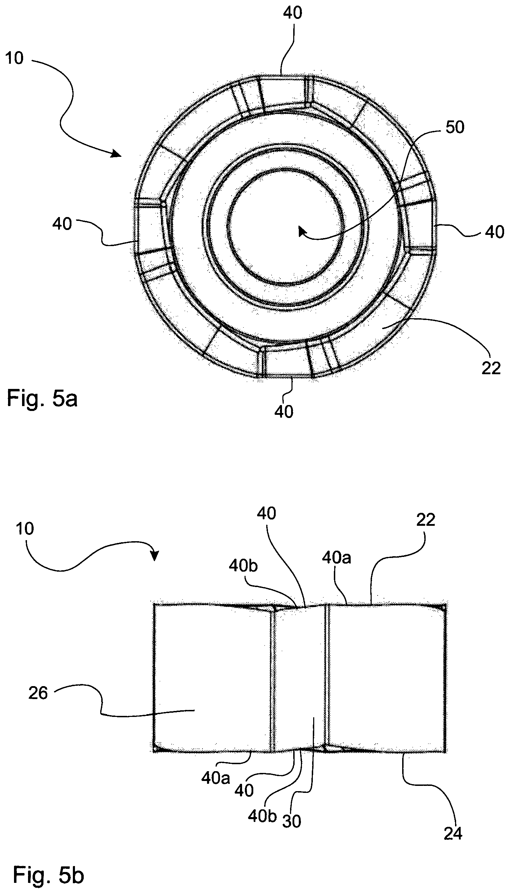

Fig. 2b ist sehr ähnlich dem Schneideinsatz -10- der Fig. 2a. Die Konstruktion ist aber einfacher aufgrund der Tatsache, dass nur vier flache Facetten -30- an einer Seitenfläche -26- des Schneideinsatzes -10- angeordnet sind. Alle diese flachen Facetten -30- haben Seitenränder, die sich im Wesentlichen entlang der Rotationsachse des Schneideinsatzes -10- erstrecken. Das Ergebnis dieser flachen Facetten -30- wird ausführlicher unter Bezug auf die Fig. 4a und 5b erörtert.

Wie insbesondere im Detail der Fig. 4b zu sehen, ist die Zylindermantelform des größten Teils der Seitenfläche -26- an der flachen Facette -30- gerade geschnitten. Eine flache Facette -30- erstreckt sich von der Vorderfläche -22-zur Rückfläche -24-. Fig. 4b zeigt im Einzelnen einen Abschnitt zwischen der flachen Facette -30- und der Vorderfläche -22-. Wie in Fig. 4b zu sehen, ist die Schneidkante -40- nicht nur zwischen der Schnittstelle der flachen Facette -30- und der Vorderfläche -22-, sondern auch zwischen dem Rest der Seitenfläche -26- und der Vorderfläche -22- gebildet. Dies führt zu zwei Teilen der Schneidkante -40-, nämlich einer primären Schneidkante -40a- und einer sekundären Schneidkante -40b-. Eine primäre Schneidkante -40a- weist eine gekrümmte Struktur auf und wird für die Hauptmaterialentfernung während eines Fräsvorgangs verwendet. Die sekundäre Schneidkante -40b- hat im Wesentlichen eine gerade Linie, insbesondere an der Schnittstelle der flachen Facette -30- und der Vorderfläche -22-. Dies führt zu der Möglichkeit, eine saubere und hochwertige Oberflächengüte nach dem Schneideschritt mit einer primären Schneidkante -40a- und einer sekundären Schneidkante -40b- bereitzustellen.

Wie zum Beispiel auch in Fig. 5a zu sehen, die eine Draufsicht auf die Vorderfläche -22- eines Schneideinsatzes -10- ist, hat der ganze Schneideinsatz im Wesentlichen einen kreisförmigen Querschnitt. Die geometrische Haupterstreckung des Schneideinsatzes -10- kann durch einen äußeren Kreis, bzw. durch einen äußeren Zylindermantel, abgedeckt werden. Die Facetten -30- befinden sich innerhalb dieses äußeren Kreises bzw. dieses äußeren Zylindermantels. Es ist auch klar, dass die Facetten -30- tangential zu diesem inneren Kreis sind, der ein einziger innerer Kreis für alle Facetten -30-ist.

Wie aus all den Fig. 1 bis 5b abgeleitet werden kann, weisen alle Ausführungsformen eines erfindungsgemäßen Schneideinsatzes -10-zumindest eine im Wesentlichen symmetrische Struktur auf. Der Vorteil einer solchen Struktur ist, dass der Schneideinsatz -10- einfacher hergestellt werden kann.

Selbstverständlich sind die bezüglich der verschiedenen obigen Ausführungsformen erörterten Einzelheiten nur kurz erörtert. Selbstverständlich können alle verschiedenen Merkmale, wenn es technisch Sinn macht, mit anderen oben beschriebenen Merkmalen kombiniert werden, ohne den Rahmen der vorliegenden Erfindung zu verlassen.

### Bezugszeichen

- 10: Schneideinsatz
- 20: Einsatzkörper
- 22: Vorderfläche
- 24: Rückfläche
- 26: Seitenfläche
- 30: Facette
- 40: Schneidkante
- 40a: primäre Schneidkante
- 40b: sekundäre Schneidkante
- 50: Durchgangsloch
- 100: Einsatzhalter

## Patentansprüche

1. Doppelseitiger Fräs-Schneideinsatz (10), der einen Einsatzkörper (20) mit einem im Wesentlichen kreisförmigen Querschnitt aufweist, wobei der Einsatzkörper (20) eine Vorderfläche (22), eine Rückfläche (24) und eine umgebende Seitenfläche (26) aufweist, die die Vorderfläche (22) und die Rückfläche (24) verbindet, wobei Schneidkanten an den Schnittstellen zur Vorderfläche und zur Rückfläche ausgebildet sind, **dadurch gekennzeichnet, dass** die Seitenfläche (26) mindestens eine Facette (30) aufweist, die sich von der Vorderfläche (22) zur Rückfläche (24) erstreckt, wobei mindestens eine Schneidkante (40) an der Schnittstelle zwischen der Vorderfläche (22) und der mindestens einen Facette (30) der Seitenfläche (26) gebildet ist und mindestens eine Schneidkante (40) an der Schnittstelle zwischen der Rückfläche (24) und der mindestens einen Facette (30) der Seitenfläche (26) gebildet ist.

2. Fräs-Schneideinsatz (10) nach Anspruch 1, **dadurch gekennzeichnet, dass** die Seitenfläche (26) sich zumindest im Wesentlichen parallel zur Rotationsachse des Schneideinsatzes (10) erstreckt.

3. Fräs-Schneideinsatz (10) nach einem der vorhergehenden Ansprüche, **dadurch gekennzeichnet, dass** die mindestens eine Facette (30) eine flache Facette ist.

4. Fräs-Schneideinsatz (10) nach einem der vorhergehenden Ansprüche, **dadurch gekennzeichnet, dass** er mindestens 4n Facetten (30) und 4n Schneidkanten (40) aufweist, wobei n ein Element von [1, 2, 3, 4,...] ist.

5. Fräs-Schneideinsatz (10) nach einem der vorhergehenden Ansprüche, **dadurch gekennzeichnet, dass** der Einsatzkörper (20) mindestens eine primäre und mindestens eine sekundäre Schneidkante (40a, 40b) aufweist, wobei die mindestens eine sekundäre Schneidkante (40b) an der Schnittstelle zwischen der Vorderfläche (22) und der mindestens einen Facette (30) der Seitenfläche (26) gebildet ist.

6. Fräs-Schneideinsatz (10) nach einem der vorhergehenden Ansprüche, **dadurch gekennzeichnet, dass** die Seitenfläche (26) außer den Facetten (30) von einer einzigen zylindrischen Umgebungsfläche abgedeckt werden kann.

7. Fräs-Schneideinsatz (10) nach einem der vorhergehenden Ansprüche, **dadurch gekennzeichnet, dass** weniger als 40 % der Fläche der Seitenfläche (26) durch Facetten (30) gebildet ist.

8. Fräs-Schneideinsatz (10) nach einem der vorhergehenden Ansprüche, **dadurch gekennzeichnet, dass** die mindestens eine Facette (30) zu einem kreisförmigen Querschnitt mit einem kleineren Durchmesser als dem Durchmesser des im Wesentlichen kreisförmigen Querschnitts des Einsatzkörpers (20) tangential ist.

9. Fräs-Schneideinsatz (10) nach einem der vorhergehenden Ansprüche, **dadurch gekennzeichnet, dass** die mindestens eine Schneidkante (40) zumindest teilweise einer geraden Linie folgt.

10. Fräs-Schneideinsatz (10) nach einem der vorhergehenden Ansprüche, **dadurch gekennzeichnet, dass** der Einsatzkörper (20) ein Durchgangsloch (50) zur Befestigung an einem Einsatzhalter (100) aufweist.

11. Fräs-Schneideinsatz (10) nach einem der vorhergehenden Ansprüche, **dadurch gekennzeichnet, dass** außer den Facetten (30) die Seitenfläche (26) bezüglich einer Rotationsachse des Einsatzkörpers (20) rotationssymmetrisch ist.

12. Fräs-Schneideinsatz (10) nach einem der vorhergehenden Ansprüche, **dadurch gekennzeichnet, dass** der spezifische Freiwinkel für die mindestens eine Facette (30) gleich 0° ist.

13. Fräswerkzeug aufweisend einen Einsatzhalter (100) und zumindest einen Schneideinsatz (10) nach einem der Ansprüche 1 bis 12.

## Claims

1. Double-sided milling cutting insert (10) comprising an insert body (20) with a substantially circular cross-section, the insert body (20) comprising a front surface (22), a back surface (24) and a surrounding side surface (26) connecting the front surface (22) and the back surface (24), wherein cutting edges are formed at the intersections to the front surface and to the back surface, **characterized in that** the side surface (26) comprises at least one facet (30) extending from the front surface (22) to the back surface (24), wherein at least one cutting edge (40) is formed at the intersection between the front surface (22) and the at least one facet (30) of the side surface (26) and at least one cutting edge (40) is formed at the intersection between the back surface (24) and the at least one facet (30) of the side surface (26).

2. Milling cutting insert (10) according to claim 1, **characterized in that** the side surface (26) extends at least substantially parallel to the rotational axis of the cutting insert (10).

3. Milling cutting insert (10) according to any one of the preceding claims, **characterized in that** the at least one facet (30) is a flat facet.

4. Milling cutting insert (10) according to any of the preceding claims, **characterized in that** it comprises at least 4n facets (30) and 4n cutting edges (40), wherein n is element of [1, 2, 3, 4,...].

5. Milling cutting insert (10) according to any of the preceding claims, **characterized in that** the insert body (20) comprises at least one primary and at least one secondary cutting edge (40a, 40b), wherein the at least one secondary cutting edge (40b) is formed at the intersection between the front surface (22) and the at least one facet (30) of the side surface (26).

6. Milling cutting insert (10) according to any of the preceding claims, **characterized in that** the side surface (26) beside the facets (30) can be covered by one single cylindrical surrounding surface.

7. Milling cutting insert (10) according to any of the preceding claims, **characterized in that** less than 40 % of the area of the side surface (26) is formed by facets (30).

8. Milling cutting insert (10) according to any of the preceding claims, **characterized in that** the at least one facet (30) is tangential to a circular cross section with a smaller diameter than the diameter of the substantially circular cross section of the insert body (20).

9. Milling cutting insert (10) according to any of the preceding claims, **characterized in that** the at least one cutting edge (40) follows at least partly a straight line.

10. Milling cutting insert (10) according to any of the preceding claims, **characterized in that** the insert body (20) comprises a through hole (50) for fixation at an insert holder (100).

11. Milling cutting insert (10) according to any of the preceding claims, **characterized in that** beside the facets (30) the side surface (26) is rotational symmetric relative to a rotational axis of the insert body (20).

12. Milling cutting insert (10) according to any of the preceding claims, **characterized in that** the specific clearance angle for the at least one facet (30) is equal to 0°.

13. Milling tool comprising an insert holder (100) and at least one cutting insert (10) according to any one of claims 1 to 12.

## Revendications

1. Insert de coupe de fraisage bilatéral (10) qui présente un corps d'insert (20) avec une section transversale sensiblement circulaire, dans lequel le corps d'insert (20) présente une surface avant (22), une surface arrière (24) et une surface latérale environnante (26) qui relie la surface avant (22) et la surface arrière (24), dans lequel des arêtes de coupe sont réalisées sur les interfaces avec la surface avant et avec la surface arrière, **caractérisé en ce que** la surface latérale (26) présente au moins une facette (30) qui s'étend de la surface avant (22) à la surface arrière (24), dans lequel au moins une arête de coupe (40) est formée sur l'interface entre la surface avant (22) et l'au moins une facette (30) de la surface latérale (26) et au moins une arête de coupe (40) est formée sur l'interface entre la surface arrière (24) et l'au moins une facette (30) de la surface latérale (26).

2. Insert de coupe de fraisage (10) selon la revendication 1, **caractérisé en ce que** la surface latérale (26) s'étend au moins sensiblement parallèlement à l'axe de rotation de l'insert de coupe (10).

3. Insert de coupe de fraisage (10) selon l'une des revendications précédentes, **caractérisé en ce que** l'au moins une facette (30) est une facette plate.

4. Insert de coupe de fraisage (10) selon l'une des revendications précédentes, **caractérisé en ce qu'**il présente au moins 4n facettes (30) et 4n arêtes de coupe (40), dans lequel n est un élément de [1, 2, 3, 4, ...].

5. Insert de coupe de fraisage (10) selon l'une des revendications précédentes, **caractérisé en ce que** le corps d'insert (20) présente au moins une arête de coupe (40a, 40b) primaire et secondaire, dans lequel l'au moins une arête de coupe secondaire (40b) est formée sur l'interface entre la surface avant (22) et l'au moins une facette (30) de la surface latérale (26).

6. Insert de coupe de fraisage (10) selon l'une des revendications précédentes, **caractérisé en ce que** la surface latérale (26) peut être recouverte hormis les facettes (30) par une seule surface environnante cylindrique.

7. Insert de coupe de fraisage (10) selon l'une des revendications précédentes, **caractérisé en ce que** moins de 40 % de la surface de la surface latérale (26) est formée par des facettes (30).

8. Insert de coupe de fraisage (10) selon l'une des revendications précédentes, **caractérisé en ce que** l'au moins une facette (30) est tangentielle à une section transversale circulaire avec un diamètre inférieur au diamètre de la section transversale sensiblement circulaire du corps d'insert (20).

9. Insert de coupe de fraisage (10) selon l'une des revendications précédentes, **caractérisé en ce que** l'au moins une arête de coupe (40) suit au moins partiellement une ligne droite.

10. Insert de coupe de fraisage (10) selon l'une des revendications précédentes, **caractérisé en ce que** le corps d'insert (20) présente un trou débouchant (50) pour la fixation sur un support d'insert (100).

11. Insert de coupe de fraisage (10) selon l'une des revendications précédentes, **caractérisé en ce que** la surface latérale (26) est symétrique en rotation par rapport à un axe de rotation du corps d'insert (20) hormis les facettes (30).

12. Insert de coupe de fraisage (10) selon l'une des revendications précédentes, **caractérisé en ce que** l'angle de dépouille spécifique pour l'au moins une facette (30) est égal à 0°.

13. Outil de fraisage présentant un support d'insert (100) et au moins un insert de coupe (10) selon l'une des revendications 1 à 12.
